# FASCICULE DE BREVET EUROPEEN

(11) **EP 1 938 047 B1**
(45) Date de publication et mention de la délivrance du brevet: **11.02.2009**
(21) Numéro de dépôt: 06820222.5
(22) Date de dépôt: 17.10.2006
(51) Int. Cl.: G01D 3/10

(54) **SYSTEME D'AFFICHAGE POUR UN AERONEF**
ANZEIGESYSTEM FÜR FLUGZEUGE
DISPLAY SYSTEM FOR AN AIRCRAFT

(30) Priorité: 18.10.2005 FR 0510583
(43) Date de publication de la demande: 02.07.2008
(73) Titulaire: Airbus France SAS, 31060 Toulouse (FR)
(72) Inventeur: POUZOLZ, François, F-31400 Toulouse (FR)
(74) Mandataire: Hauer, Bernard
(86) Numéro de dépôt international: PCT/FR2006/002325
(87) Numéro de publication internationale: WO 2007/045753

(56) Documents cités:
- FR-A- 2 846 296
- US-A- 6 112 140
- US-B1- 6 281 810
- MORGAN J ET AL: "MD-11 Electronic Instrument System" PROCEEDINGS OF THE DIGITAL AVIONICS SYSTEMS CONFERENCE. SEATTLE, OCT. 5 - 8, 1992, NEW YORK, IEEE, US, vol. CONF. 11, 5 octobre 1992 (1992-10-05), pages 248-253, XP010106756 ISBN: 0-7803-0820-4

## Description

La présente invention concerne un système d'affichage pour un aéronef, en particulier un avion de transport civil.

Plus précisément, elle concerne un système d'affichage du type comportant une pluralité d'écrans dont chacun est formé de manière à pouvoir afficher une image qui lui est associée. Dans le cadre de la présente invention, on entend par image une page d'informations précisées ci-dessous, qui est susceptible d'être visualisée sur l'écran associé.

Un tel système d'affichage qui est installé dans le poste de pilotage est destiné à fournir de façon usuelle, au(x) pilote(s) de l'aéronef, des informations (telles que l'altitude, la vitesse, l'attitude, la navigation, les régimes moteur, l'état de systèmes, ...) qui sont utilisées par le(s) pilote(s) lors d'un vol de l'aéronef. Parmi ces informations, certaines, par exemple des informations de pilotage à court terme, sont impérativement nécessaires au(x) pilote(s) pour faire voler l'aéronef en toute sécurité.

De tels systèmes d'affichage connus sont par exemple décrits dans les documents "MORGAN J ET AL: MD-11 Electronic Instrument System" PROCEEDINGS OF THE DIGITAL AVIONICS SYSTEMS CONFERENCE. SEATTLE, OCT. 5 - 8, 1992, NEW YORK, IEEE, US, vol. CONF. 11, 5 octobre 1992, pages 248-253", US-A-6112140 et FR-A-2846296.

Aussi, une panne d'un écran qui affiche une image contenant des informations absolument nécessaires au pilotage, fait apparaître un grave problème de sécurité pour l'aéronef. Le plus souvent, des procédures spécifiques de recherche sont prévues pour permettre au pilote de retrouver au moins certaines des informations perdues par la panne. Toutefois, de telles procédures de recherche présentent une charge de travail très importante pour le pilote, charge qui apparaît souvent excessive notamment dans des phases de vol (telles que l'atterrissage ou le décollage par exemple) pour lesquelles les manoeuvres de pilotage de l'aéronef requièrent toute l'attention du pilote.

La présente invention concerne un système d'affichage pour aéronef, qui permet de remédier aux inconvénients précités.

Selon l'invention, ledit système d'affichage du type comportant une pluralité d'écrans dont chacun est formé de manière à pouvoir afficher une image, et une image particulière étant associée à chacun desdits écrans,
est remarquable en ce qu'il comporte de plus :
- des moyens de détection pour détecter toute panne d'un desdits écrans ; et
- des moyens de reconfiguration automatique pour, lors de la détection d'une panne d'au moins un écran par lesdits moyens de détection :
   ■ vérifier automatiquement si l'image qui est associée audit écran en panne est prioritaire par rapport à au moins une autre image associée à un autre écran, conformément à au moins un ensemble de règles de priorité prédéterminées ; et
   ■ lorsque l'image qui est associée audit écran en panne est prioritaire, afficher cette image sur un écran valide, auquel est associée une image qui présente une priorité moindre selon ledit ensemble de règles de priorité.

Ainsi, grâce à l'invention, en cas de panne d'un écran qui comporte une image prioritaire, en particulier une image contenant des informations qui sont absolument nécessaires au pilotage telles que des informatisons de pilotage à court terme (vitesse, attitude, altitude, ...) par exemple, cette image prioritaire est affichée automatiquement sur un autre écran qui est valide (c'est-à-dire qui n'est pas en panne).

Par conséquent, le pilote de l'aéronef dispose toujours, même en cas de panne d'un ou plusieurs écrans dudit système d'affichage, des informations les plus importantes.

De plus, comme la reconfiguration d'image (ou changement de l'image affichée) conforme à l'invention est réalisée de façon automatique, elle ne nécessite aucune action de la part du pilote, qui peut ainsi rester entièrement concentré sur le pilotage en cas de panne d'un écran.

Dans un mode de réalisation préféré qui permet de minimiser les interactions entre les différents écrans de manière à rendre le système d'affichage conforme à l'invention particulièrement robuste, lesdits moyens de reconfiguration automatique comportent une pluralité de moyens auxiliaires, dont chacun est associé à l'un desdits écrans, commande automatiquement l'affichage réalisé sur l'écran associé, et comporte à cet effet une table d'état de l'écran associé, qui indique l'image que ledit écran associé doit afficher automatiquement, en fonction d'un état de validité d'au moins certains des autres écrans et dudit ensemble de règles de priorité.

De préférence, ces règles de priorité sont choisies de façon à optimiser en temps réel la configuration opérationnelle de l'affichage dans le poste de pilotage en fonction du besoin opérationnel des pilotes.

En outre, dans un mode de réalisation préféré, ledit système d'affichage comporte, de plus, des moyens de reconfiguration manuelle permettant à un opérateur de commander manuellement l'affichage d'une image particulière sur au moins l'un desdits écrans du système d'affichage. Ainsi, grâce à l'invention, le pilote de l'aéronef est toujours en mesure de commander l'affichage de n'emporte quelle image qu'il désire voir affichée, et en particulier une image qui était initialement affichée sur un écran et qui a été remplacée par une image prioritaire suite à une panne d'écran.

Dans un mode de réalisation particulier, lesdits moyens de reconfiguration manuelle comportent :
- des premiers moyens actionnables pour commander directement l'affichage d'une image particulière sur un écran valide. Ainsi, le pilote peut accéder directement à une image particulière, en utilisant un raccourci ; et/ou
- des deuxièmes moyens actionnables pour commander l'affichage sur un écran valide d'une pluralité d'images qui sont affichées de façon cyclique selon un ordre préétabli, successivement lors de chaque actionnement desdits deuxièmes moyens. On peut ainsi prévoir que le pilote soit en mesure d'accéder sur un même écran à l'ensemble ou à une partie des images existantes, par exemple lors d'une pluralité de pannes d'écran. De plus, par cette commande cyclique, les différentes images considérées sont affichées successivement, ce qui permet au pilote de choisir de manière simple et rapide une image recherchée ; et/ou
- des troisièmes moyens actionnables pour commander l'affichage sur un écran valide de deux images différentes qui sont affichées successivement de façon alternative lors de chaque actionnement desdits troisièmes moyens. Cette dernière caractéristique est particulièrement appropriée à l'affichage successif sur un même écran de deux images différentes comportant toutes les deux des informations importantes, telles que par exemple des informations de pilotage à court terme d'une part et des informations de navigation d'autre part.

Dans un mode de réalisation particulier, ledit système d'affichage comporte une pluralité d'écrans personnels destinés (personnellement) à un même pilote (pilote principal ou copilote) de l'aéronef et comprenant un premier écran auquel est associée une première image concernant des informations de pilotage à court terme, et lesdits moyens de reconfiguration automatique sont formés de manière :
- à afficher ladite première image sur un écran personnel valide, en cas de panne dudit premier écran ; et
- à empêcher que deux images identiques soient affichées simultanément sur deux écrans personnels différents.

En outre, avantageusement, ledit système d'affichage comporte une pluralité d'écrans communs destinés simultanément à deux pilotes (pilote principal et copilote) de l'aéronef et comprenant un premier écran auquel est associée une première image concernant des informations relatives au moins aux moteurs de l'aéronef, et lesdits moyens de reconfiguration automatique sont formés de manière :
- à afficher ladite première image sur un écran commun valide, en cas de panne dudit premier écran ; et
- à empêcher que deux images identiques soient affichées simultanément sur deux écrans communs différents.

Les figures du dessin annexé feront bien comprendre comment l'invention peut être réalisée. Sur ces figures, des références identiques désignent des éléments semblables.

La figure 1 est le schéma synoptique d'un système d'affichage conforme à l'invention.

La figure 2 illustre schématiquement un exemple de disposition d'écrans d'un système d'affichage conforme à l'invention.

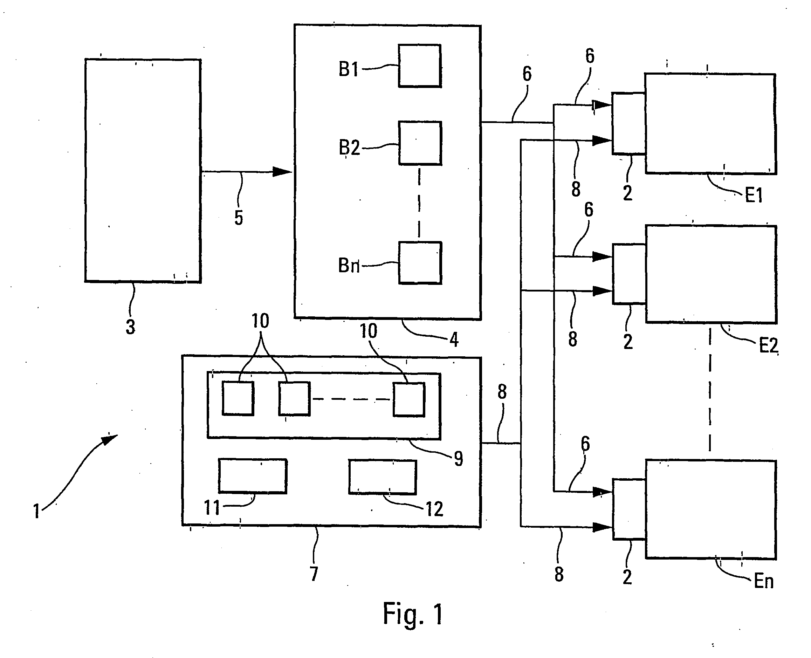

Le système d'affichage 1 conforme à l'invention et représenté schématiquement sur la figure 1 est installé dans le poste de pilotage d'un aéronef non représente, en particulier d'un avion de transport, et est destiné à fournir de façon usuelle au pilote de l'aéronef des informations précisées ci-dessous, qui sont utilisées par ce dernier lors d'un vol dudit aéronef.

Pour ce faire, ledit système d'affichage 1 comporte une pluralité d'écrans E1, E2, ..., En, par exemple des écrans du type connu à cristaux liquides LCD ("Liquid Crystal Display" en anglais). Chacun desdits écrans E1 à En est susceptible d'afficher une image qui lui est associée et comporte à cet effet un moyen 2 usuel destiné notamment à la mise en forme de l'image à afficher.

Dans le cadre de la présente invention, on entend par image une page contenant des informations précisées ci-dessous, qui est susceptible d'être visualisée sur l'écran E1 à En associé.

Selon l'invention, ledit système d'affichage 1 comporte de plus :
des moyens de détection 3 pour détecter toute panne susceptible d'apparaître sur l'un desdits écrans E1 à En. Dans le cadre de la présente invention, on considère qu'un écran est en panne lorsqu'il n'est pas en mesure d'afficher une image, en particulier parce qu'il présente un dysfonctionnement ou simplement parce qu'il est éteint ; et
- des moyens de reconfiguration automatique 4 qui sont reliés par l'intermédiaire d'une liaison 5 auxdits moyens de détection 3 et par l'intermédiaire de liaisons 6 aux éléments 2 desdits écrans E1 à En, et qui sont formés de manière à réaliser les opérations suivantes, lors de la détection d'une panne d'au moins un écran E1 à En par lesdits moyens de détection 3 :
   ■ vérifier automatiquement si l'image qui est associée à l'écran en panne est prioritaire par rapport à une autre image associée à un autre écran, conformément à au moins un ensemble de règles de priorité prédéterminées, qui sera précisé ci-dessous ; et
- lorsque l'image qui est associée audit écran en panne est prioritaire, afficher cette image sur un écran valide, auquel est associée une image qui présente une priorité moindre selon ledit ensemble de règles de priorité.

Ainsi, grâce au système d'affichage 1 conforme à l'invention, en cas de panne d'un écran qui comporte une image prioritaire, en particulier une image contenant des informations qui sont absolument nécessaires au pilotage telles que des informations de pilotage à court terme (vitesse, attitude, altitude, ...) par exemple, cette image prioritaire est affichée automatiquement sur un autre écran qui est valide (c'est-à-dire qui n'est pas en panne).

Par conséquent, le pilote de l'aéronef dispose toujours, même en cas de panne d'un ou plusieurs écrans dudit système d'affichage 1, des informations les plus importantes.

De plus, comme les moyens 4 réalisent la reconfiguration d'image de façon automatique, cette reconfiguration d'image (c'est-à-dire le changement d'image affichée) ne nécessite aucune action de la part du pilote, qui peut ainsi rester entièrement concentré sur le pilotage en cas de panne d'un écran.

Dans un mode de réalisation particulier, lesdits moyens de détection 3 correspondent à des boucles de surveillance qui scrutent l'état et les configurations des écrans.

Par ailleurs, dans un mode de réalisation préféré qui permet de minimiser les interactions entre les différents écrans E1 à En de manière à rendre le système d'affichage 1 conforme à l'invention particulièrement robuste, lesdits moyens de reconfiguration automatique 4 comportent une pluralité de moyens auxiliaires B1, B2; ..., Bn, dont chacun :
- est associé respectivement à l'un desdits écrans E1, E2, ..., En ;
- commande automatiquement l'affichage réalisé sur l'écran associé ; et
- comporte à cet effet une table d'état de l'écran associé, qui indique l'image que ledit écran associé doit afficher automatiquement, en fonction de l'état de validité (valide/en panne) d'au moins certains des autres écrans (un écran qui n'est pas détecté en panne par les moyens de détection 3 est considéré comme valide) et dudit ensemble de règles de priorité.

Dans un mode de réalisation particulier, lesdits moyens auxiliaires B1 à Bn peuvent être intégrés, respectivement, directement dans les moyens 2 des écrans E1 à En correspondants.

En outre, ledit système d'affichage 1 comporte, de plus, des moyens de reconfiguration manuelle 7 qui sont reliés par l'intermédiaire de liaisons 8 auxdits moyens 2 desdits écrans E1 à En et qui sont formés de manière à permettre à un opérateur, en particulier un pilote de l'aéronef, de commander manuellement l'affichage d'une image particulière sur au moins l'un desdits écrans E1 à En. Ainsi, grâce auxdits moyens de reconfiguration manuelle 7, le pilote de l'aéronef est toujours en mesure de commander l'affichage de n'importe quelle image qu'il désire voir affichée, et en particulier une image qui était initialement affichée sur l'écran considéré et qui a été remplacée par une image prioritaire suite à une panne d'écran.

Dans un mode de réalisation particulier, lesdits moyens de reconfiguration manuelle 7 comportent un ensemble 9 de moyens 10 actionnables, par exemple des touches, dont chacun est associé à une image particulière. L'actionnement d'un moyen 10 quelconque permet de commander directement l'affichage de l'image correspondante sur un écran valide. Cet écran valide représente normalement l'écran auquel est associée l'image dont l'affichage est commandé, et en cas de panne de cet écran il représente un autre écran valide du système d'affichage 1.

Ainsi, grâce audit ensemble 9 de moyens 10 actionnables, le pilote peut accéder directement, sous forme de raccourci, aux différentes images associées auxdits moyens 10.

Lesdits moyens de reconfiguration manuelle 7 comportent également au moins un moyen 1 actionnable, par exemple une touche ou un bouton rotatif, pour commander l'affichage d'une pluralité d'images sur un écran valide ou pour commander l'affichage d'une pluralité de configurations d'images sur un ensemble d'écrans valides. Ces images sont affichées de façon cyclique, selon un ordre préétabli, et ceci successivement lors de chaque actionnement dudit moyen 11. Un pilote de l'aéronef est ainsi en mesure d'accéder à l'ensemble des images existantes, et ceci notamment lors d'une pluralité de pannes d'écran. De plus, par une telle commande cyclique, les différentes images ou configurations d'images considérées sont affichées successivement, ce qui permet au pilote de choisir de manière simple et rapide l'image recherchée. La liste d'images prise en compte peut par exemple être accessible via l'un des écrans valides, ce qui permet de faciliter la sélection.

Grâce audit moyen 11, le pilote n'a pas à comprendre une panne. Il lui suffit en effet d'actionner ce moyen 11 pour trouver l'image perdue suite à une panne d'écran, ce qui procure un gain opérationnel évident.

En outre, lesdits moyens de reconfiguration manuelle 7 comportent au moins un moyen 12, par exemple une touche ou un bouton rotatif, pour commander l'affichage sur un écran valide de deux images différentes qui sont affichées successivement de façon alternative lors de chaque actionnement dudit moyen 12. Ce moyen 12 est particulièrement approprié à l'affichage successif sur un même écran de deux images différentes comportant toutes les deux des informations importantes, telles que par exemple des informations de pilotage à court terme d'une part et des informations de navigation d'autre part.

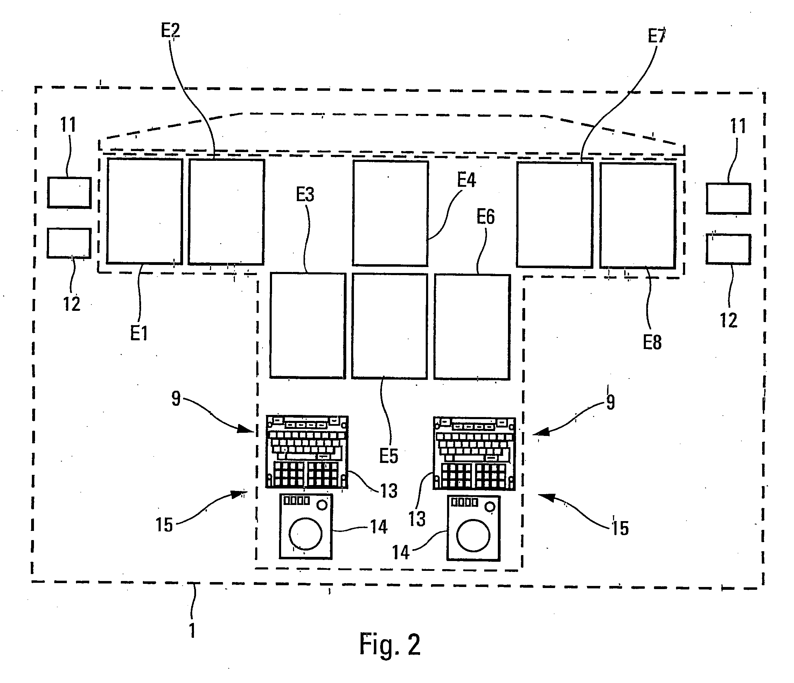

Sur la figure 2, on a représenté un exemple particulier d'agencement de différents moyens du système d'affichage 1, dans le poste de pilotage d'un aéronef. Dans cet exemple, les écrans E1, E2 et E3, qui sont situés sur la partie gauche du poste de pilotage, sont des écrans personnels destinés (personnellement) au pilote de l'aéronef. En outre, les écrans E6, E7 et E8, qui sont situés sur la partie droit du poste de pilotage, sont des écrans personnels destinés (personnellement) au copilote de l'aéronef. Quant aux écrans centraux E4 et E5, ils sont communs à la fois audit pilote et audit copilote.

Dans l'exemple représenté sur la figure 2, les moyens de reconfiguration manuelle 7 (ensemble 9 de moyens 10, moyens 10 et 11) sont dédoublés et mis à la disposition à la fois du pilote (côté gauche) et du copilote (côté droit). En particulier, l'ensemble 9 de moyens 10 peut correspondre à un ensemble de touches d'un clavier 13 qui fait partie, avec un désignateur 14, par exemple une boule rotative, d'un système de dialogue homme/machine 15.

De préférence, les écrans E8, E7 et E6 affichent en fonctionnement normal les mêmes images que, respectivement, les écrans E1, E2 et E3.

A titre d'illustration, ledit système d'affichage 1 peut par exemple afficher :
- sur les écrans E1 et E8, par exemple des écrans primaires de pilotage de type PFD ("Primary Flight Display" en anglais), une image PF contenant des informations usuelles de pilotage à court terme, telles que la vitesse, l'altitude et/ou un horizon artificiel qui s'incline lorsque l'aéronef s'incline ;
- sur les écrans E2 et E7, par exemple des écrans de navigation de type ND ("Navigation Display" en anglais), une image N contenant des informations de navigation usuelles ;
- sur les écrans E3 et E6, par exemple des écrans multifonctions de type MFD ("Multi Function Display" en anglais), une image MF contenant des informations relatives aux systèmes de surveillance, de navigation et de communication de l'aéronef ;
- sur l'écran commue E4, par exemple un écran associé aux moteurs et aux alarmes de type EWD ("Engine and Warning Display" en anglais), une image EW contenant des informations relatives aux moteurs et aux alarmes ; et
- sur l'écran commun E5, par exemple un écran de système de type SD ("System Display" en anglais), une image S contenant des informations de surveillance de systèmes de l'aéronef.

Dans cet exemple particulier, lesdits moyens de reconfiguration automatique 4 prennent en compte notamment l'ensemble des règles (de priorité) suivantes :
- en l'absence de panne d'écran, les affichages précités sont mis en oeuvre ;
- si l'écran E1 est en panne, l'image PF est affichée automatiquement sur l'écran E2, à la place de l'image N (ou d'une autre image) qui est affichée à ce moment ;
- si l'écran E8 est en panne, l'image PF est affichée automatiquement sur l'écran E7, à la place de l'image N (ou d'une autre image) qui est affichée à ce moment ;
- si l'écran E4 est en panne, l'image EW est affichée automatiquement sur l'écran E5, à la place de l'image S (ou d'une autre image) qui est affichée à ce moment ;
- les images EW et S ne doivent pas être affichées sur les deux côtés (pilote, copilote) en même temps ;
- une même image ne doit pas être affichée en même temps sur deux ou trois des écrans personnels E1, E2, E3 du pilote ;
- une même image ne doit pas être affichée en même temps sur deux ou trois des écrans personnels E6, E7, E8 du copilote ; et
- une même image ne doit pas être affichée en même temps sur les deux écrans communs E4 et E5.

Le système d'affichage 1 conforme à l'invention permet d'assurer une disponibilité maximale des informations pour le(s) pilote(s) en cas de panne d'écran, et ceci en simplifiant les interactions entre le(s) pilote(s) et ledit système d'affichage 1. Ledit système d'affichage 1 permet ainsi de minimiser les effets d'une panne d'écran sur la charge de travail du (ou des) pilote(s).

De plus, ledit système d'affichage 1 propose au(x) pilote(s) un en semble de configurations d'images optimisées de manière opérationnelle, quels que soient les cas de pannes d'écran, avec une interface homme/machine simplifiée.

## Revendications

1. Système d'affichage pour un aéronef, ledit système (1) comportant :
- une pluralité d'écrans (E1 à En) dont chacun est formé de manière à pouvoir afficher une image, et une image particulière étant associée à chacun desdits écrans (E1 à En) ;
- des moyens de détection (3) pour détecter toute panne d'un desdits écrans (E1 à En) ; et
- des moyens de reconfiguration automatique (4) pour, lors de la détection d'une panne d'au moins un écran par lesdits moyens de détection (3) :
vérifier automatiquement si l'image qui est associée audit écran en panne est prioritaire par rapport à au moins une autre image associée à un autre écran, conformément à au moins un ensemble de règles de priorité prédéterminées ; et
• lorsque l'image qui est associée audit écran en panne est prioritaire, afficher cette image sur un écran valide, auquel est associée une image qui présente une priorité moindre selon ledit ensemble de règles de priorité,
**caractérisé en ce que** lesdits moyens de reconfiguration automatique (4) comportent une pluralité de moyens auxiliaires (B1 à Bn), dont chacun est associé à l'un desdits écrans (E1 à En) et comporte à cet effet une table d'état de l'écran associé, qui indique l'image que ledit écran associé droit afficher automatiquement, en fonction d'un état de validité d'au moins certains des autres écrans et dudit ensemble de règles de priorité.

2. Système selon la revendication 1,
**caractérisé en ce qu'**il comporte, de plus, des moyens de reconfiguration-manuelle (7) permettant à un opérateur de commander manuellement l'affichage d'une image particulière sur au moins l'un desdits écrans (E1 à En).

3. Système selon la revendication 2,
**caractérisé en ce que** lesdits moyens de reconfiguration manuelle (7) comportent des premiers moyens (10) actionnables, pour commander directement l'affichage d'une image particulière sur un écran valide.

4. Système selon l'une des revendications 2 et 3,
**caractérisé en ce que** lesdits moyens de reconfiguration manuelle (7) comportent des deuxièmes moyens (11) actionnables, pour commander l'affichage sur un écran valide d'une pluralité d'images qui sont affichées de façon cyclique selon un ordre préétabli, successivement lors de chaque actionnement.desdits deuxièmes moyens (11).

5. Système selon l'une des revendications 2 à 4,
**caractérisé en ce que** lesdits moyens de reconfiguration manuelle (7) comportent des troisièmes moyens (12) actionnables, pour commander l'affichage sur un écran valide de deux images différentes qui sont affichées successivement de façon alternative lors de chaque actionnement desdits troisièmes moyens (12).

6. Système selon l'une quelconque des revendications précédentes,
**caractérisé en ce qu'**il comporte une pluralité d'écrans personnels (E1, E2, E3 ; E6, E7, E8) destinés à un même pilote de l'aéronef et comprenant un premier écran (E1; E8) auquel est associé une première image concernant des informations de pilotage à court terme, et **en ce que** lesdits moyens de reconfiguration automatique (7) sont formés de manière :
- à afficher ladite première image sur un écran personnel valide, en cas de panne dudit premier écran (E1 ; E8) ; et
- à empêcher que deux images identiques soient affichées simultanément sur deux écrans personnels différents.

7. Système selon l'une quelconque des revendications précédentes,
**caractérisé en ce qu'**il comporte une pluralité d'écrans communs (E4, E5) destinés simultanément à deux pilotes de l'aéronef et comprenant un premier écran (E4) auquel est associée une première image concernant des informations relatives au moins aux moteurs de l'aéronef, et **en ce que** lesdits moyens de reconfiguration automatique (7) sont formés de manière :
- à afficher ladite première image sur un écran commun valide, en cas de panne dudit premier écran (E4) ; et
- à empêcher que deux images identiques soient affichées simultanément sur deux écrans communs différents.

8. Aéronef,
**caractérisé en ce qu'**il comporte un système d'affichage (1) tel que celui spécifié sous l'une quelconque des revendications 1 à 7.

## Claims

1. A display system for an aircraft, said system (1) comprising:
- a plurality of screens (E1 to En) each of which is formed so as to be able to display an image, and a particular image being associated with each of said screens (E1 to En);
- detection means (3) for detecting any failure of one of said screens (E1 to En); and
- automatic reconfiguration means (4) intended, upon the detection of a failure of at least one screen by said detection means (3):
• to automatically check if the image which is associated with said failed screen has priority over at least one other image associated with another screen, based on at least one set of predetermined priority rules; and
• when the image which is associated with said failed screen has priority, to display this image on a valid screen with which there is associated an image which has a lower priority according to said set of priority rules,
**characterized in that** said automatic reconfiguration means (4) comprise a plurality of auxiliary means (B1 to Bn), each of which is associated with one of said screens (E1 to En) and for this purpose comprises a status table for the associated screen which indicates the image that said associated screen should display automatically as a function of a validity status of at least some of the other screens and as a function of said set of priority rules.

2. The system as claimed in claim 1, **characterized in that** it additionally comprises manual reconfiguration means (7) allowing an operator to manually command the display of a particular image on at least one of said screens (E1 to En).

3. The system as claimed in claim 2, **characterized in that** said manual reconfiguration means (7) comprise first actuable means (10) for directly commanding the display of a particular image on a valid screen.

4. The system as claimed in either of claims 2 and 3, **characterized in that** said manual reconfiguration means (7) comprise second actuable means (11) for commanding the display on a valid screen of a plurality of images which are displayed cyclically in a pre-established order and successively upon each actuation of said second means (11).

5. The system as claimed in one of claims 2 to 4, **characterized in that** said manual reconfiguration means (7) comprise third actuable means (12) for commanding the display on a valid screen of two different images which are displayed successively in an alternating manner upon each actuation of said third means (12).

6. The system as claimed in any one of the preceding claims, **characterized in that** it comprises a plurality of personal screens (E1, E2, E3; E6, E7, E8) intended for one and the same pilot of the aircraft and comprising a first screen (E1; E8) with which there is associated a first image concerning short-term piloting information, and **in that** said automatic reconfiguration means (7) are formed so as:
- to display said first image on a valid personal screen in the event of failure of said first screen (E1; E8); and
- to prevent two identical images from being displayed simultaneously on two different personal screens.

7. The system as claimed in any one of the preceding claims, **characterized in that** it comprises a plurality of common screens (E4, E5) simultaneously intended for two pilots of the aircraft and comprising a first screen (E4) with which there is associated a first image concerning information relating at least to the engines of the aircraft, and **in that** said automatic reconfiguration means (7) are formed so as:
- to display said first image on a valid common screen in the event of failure of said first screen (E4); and
- to prevent two identical images from being displayed simultaneously on two different common screens.

8. An aircraft, **characterized in that** it comprises a display system (1) such as the one specified in any one of claims 1 to 7.

## Patentansprüche

1. Anzeigesystem für ein Flugzeug, wobei das System (1) Folgendes umfasst:
- eine Vielzahl von Bildschirmen (E1 bis En), die jeweils dazu eingerichtet sind, ein Bild anzeigen zu können, wobei jedem der Bildschirme (E1 bis En) ein bestimmtes Bild zugeordnet ist,
- Detektionsmittel (3) zur Ermittlung eines Ausfalls eines der Bildschirme (E1 bis En) und
- automatische Rekonfigurationsmittel (4), um bei Ermittlung eines Ausfalls mindestens eines Bildschirms durch die Detektionsmittel (3):
• automatisch zu überprüfen, ob das dem ausgefallenen Bildschirm zugeordnete Bild gemäß mindestens einem Satz von vorgegebenen Vorrangsregeln Vorrang vor mindestens einem anderen Bild hat, das einem anderen Bildschirm zugeordnet ist und
• wenn das dem ausgefallenen Bildschirm zugeordnete Bild Vorrang hat, dieses Bild auf einem bestätigten Bildschirm, dem ein Bild zugeordnet ist, das gemäß dem Satz von Vorrangsregeln eine niedrigere Priorität aufweist, anzuzeigen,
**dadurch gekennzeichnet, dass** die automatischen Rekonfigurationsmittel (4) eine Vielzahl von Hilfsmitteln (B1 bis Bn) umfassen, von denen jedes einem der Bildschirme (E1 bis En) zugeordnet ist und zu diesem Zweck eine Statustabelle des zugeordneten Bildschirms umfasst, die das Bild angibt, das der zugeordnete Bildschirm in Abhängigkeit eines Bestätigungsstatus von zumindest einigen der anderen Bildschirme und von dem Satz von Vorrangsregeln automatisch anzeigen soll.

2. System nach Anspruch 1,
**dadurch gekennzeichnet, dass** es zusätzlich manuelle Rekonfigurationsmittel (7) umfasst, die es einer Bedienperson ermöglichen, die Anzeige eines bestimmten Bildes auf mindestens einem der Bildschirme (E1 bis En) manuell anzusteuern.

3. System nach Anspruch 2,
**dadurch gekennzeichnet, dass** die manuellen Rekonfigurationsmittel (7) erste betätigbare Mittel (10) zum direkten Ansteuern der Anzeige eines bestimmten Bildes auf einem bestätigten Bildschirm umfassen.

4. System nach Anspruch 2 oder 3,
**dadurch gekennzeichnet, dass** die manuellen Rekonfigurationsmittel (7) zweite betätigbare Mittel (11) umfassen, um auf einem bestätigten Bildschirm die Anzeige einer Vielzahl von Bildern, die bei jeder Betätigung der zweiten Mittel (11) gemäß einer vorbestimmten Reihenfolge zyklisch angezeigt werden, anzusteuern.

5. System nach einem der Ansprüche 2 bis 4,
**dadurch gekennzeichnet, dass** die manuellen Rekonfigurationsmittel (7) dritte betätigbare Mittel (12) umfassen, um auf einem bestätigten Bildschirm die Anzeige von zwei unterschiedlichen Bildern, die bei jeder Betätigung der dritten Mittel (12) abwechselnd nacheinander angezeigt werden, anzusteuern.

6. System nach einem der vorhergehenden Ansprüche,
**dadurch gekennzeichnet, dass** es eine Vielzahl von persönlichen Bildschirmen (E1, E2, E3; E6, E7, E8) umfasst, die für ein und denselben Piloten des Flugzeugs bestimmt sind und die einen ersten Bildschirm (E1; E8) umfassen, dem ein erstes, Informationen zur kurzfristigen Flugsteuerung betreffendes Bild zugeordnet ist und **dadurch**, dass die automatischen Rekonfigurationsmittel (7) dazu ausgebildet sind:
- im Falle eines Ausfalls des ersten Bildschirms (E1; E8) das erste Bild auf einem bestätigten persönlichen Bildschirm anzuzeigen und
- zu verhindern, dass zwei identische Bilder gleichzeitig auf zwei verschiedenen persönlichen Bildschirmen angezeigt werden.

7. System nach einem der vorhergehenden Ansprüche,
**dadurch gekennzeichnet, dass** es eine Vielzahl von gemeinsamen Bildschirmen (E4, E5) umfasst, die gleichzeitig für zwei Piloten des Flugzeugs bestimmt sind und die einen ersten Bildschirm (E4) umfassen, dem ein erstes Bild, das Informationen zumindest über die Motoren des Flugzeugs betrifft, zugeordnet ist, und **dadurch**, dass die automatischen Rekonfigurationsmittel (7) dazu ausgebildet sind:
- im Falle eines Ausfalls des ersten Bildschirms (E4) das erste Bild auf einem bestätigten gemeinsamen Bildschirm anzuzeigen und
- zu verhindern, dass zwei identische Bilder gleichzeitig auf zwei verschiedenen gemeinsamen Bildschirmen angezeigt werden.

8. Flugzeug,
**dadurch gekennzeichnet, dass** es ein Anzeigesystem (1), wie das unter einem der Ansprüche 1 bis 7 spezifizierte umfasst.
